# EUROPEAN PATENT SPECIFICATION

(11) **EP 2 716 510 B1**
(45) Date of publication and mention of the grant of the patent: **25.11.2015**
(21) Application number: 13154736.6
(22) Date of filing: 11.02.2013
(51) Int. Cl.: B60R 25/20, G07C 9/00

(54) **Authentication system and method for a pool of vehicles**
Authentifizierungssystem und Verfahren für einen Fahrzeugpark
Système et procédé d'authentification destiné à un groupe de véhicules

(43) Date of publication of application: 09.04.2014
(73) Proprietor: Volvo Car Corporation, 40 531 Göteborg (SE)
(72) Inventor: Hirche, Mark, 42541 Hisings Kärra (SE); Magnusson, Tomas, 41664 Göteborg (SE); Green, David, SE-436 58 Hovas (SE)
(74) Representative: Kraenzmer, Martin

(56) References cited:
- EP-A2- 1 020 335
- WO-A1-2006/133535
- WO-A2-2007/106875
- DE-A1-102005 034 477
- DE-B3-102005 031 376
- US-A1- 2006 082 434
- US-A1- 2008 066 186
- US-B1- 6 850 153
- US-B2- 7 808 371

## Description

### Technical field

The invention refers to an authentication system and a method for a pool of vehicles. The authentication system comprises an authentication device in the vehicle, a user key for opening and starting the vehicle and an authentication centre. The authentication device comprises first storing means for storing access information regarding at least one allowed user key for the vehicle. The authentication device comprises means for sending and receiving information to and from the authentication centre. The user key comprises second storing means for storing at least a user key identity information. The authentication centre comprises means for sending and receiving information to and from the authentication device. The authentication centre comprises third storing means for storing the user key identity information,

### Background art

In motor vehicles of today used in vehicle sharing or hiring business there are keys allocated to the vehicle for opening and starting the vehicle. The keys contain codes with which the user authenticates itself to the vehicle. The codes are indefinitely stored in the vehicle and are associated to the keys that are programmed to the vehicles. In the known vehicle fleets it is known to allow a user access to different cars by use of specific authentication devices.

For example, US 7808371 discloses a vehicle fleet security system in which a vehicle security unit is installed inside each fleet vehicle. When opening the vehicle (with a vehicle key) the vehicle security unit sends a disturbance event message to a fleet master unit. The user must use an electronic security key for authorization within a predetermined deactivation time. The security key code is verified by the fleet master unit in order to disarm the disturbance detector. One problem with this system is that the user may feel stressed disengaging the disturbance message. Another problem is the use of two items for opening and using the vehicle. A third problem is the limitation to use the key delivered with the vehicle.

EP 1 020 335 represents further background art.

### Summary of invention

The object of the invention is to remedy the problems described with prior art by temporarily allowing any key made for a predetermined kind of lock fitted in one or more vehicles to be used by a participant in a vehicle pool or vehicle fleet. The vehicle pool or vehicle fleet is a group of vehicles that can be used by one or many users associated to that vehicle group by a specific contract or agreement. A vehicle pool or vehicle fleet typically serves an association comprising a number of members that can use either of the vehicles when they are free, i.e. not booked by someone else. The vehicle pool or vehicle fleet may also be a hiring business. Hereinafter, the vehicle pool and vehicle fleet are commonly referred to as vehicle pool.

The user key has a unique and non-alterable serial number from the manufacturing plant and the user key identity information is programmed and stored in the second storing means. The user key identity information may be generated and stored in any suitable shop having license to perform such a task.

The request from the user to use the vehicle may be done directly to the authentication device or the request from the user to use the vehicle may be done via the authentication centre. The authentication centre may advantageously be connected to the Internet or may be a part of the Internet. For example, the authentication centre may be or may be a part of a cloud service, i.e. a virtual centre being created and served by one or several servers and Internet service providers. The user may enter the car sharing pool by submitting a one off type of membership by payment of a fee and by submitting necessary Key information. As an alternative, the user may be a long time member and where the Key information is stored in the authentication centre during the entire membership time. The user may request the use of a vehicle by use of any communications means compatible with the network used by the authentication centre, for example a homepage on the Internet and/or an application for a mobile phone or a tablet and/or a kiosk terminal.

In order to avoid stacking access information in the authentication device, the authentication device is arranged to remove the access information when the time period is ended.

The authentication device is arranged to decrypt the access information for comparison between the embedded user key identity information stored in the first storing means with the user key identity information stored in the second storing means. It should be noted that the encryption is made in order to establish a secure transfer of the Key identity information from the authentication centre to the authentication device.

The first storing means is arranged to permanently store information on at least one original user key being specially adapted for that one vehicle in which the first storing means is implemented. In today's vehicles it is normal to allocate a key or key set to be used specifically to one vehicle. One advantage of the invention is that the same Key may be temporarily used on a different vehicle.

Hence, one benefit of the invention is that the system and method gives a user the possibility to use his/her own key to open and start the car. This gives an improved ownership feeling in addition to the obvious advantage of having only one item to keep track of. The use of his/her own key also has the advantage of limiting physical handovers of equipment when using the vehicle pool, which means that the distribution of vehicles between the users within the vehicle pool can be done in a virtual environment. The virtual environment may for example be a homepage on the Internet, an application in an electronic device such as a telephone, tablet, computer, a call center, a cash ordering machine, etc. The virtual environment must be connected to a transmitter that can send a wireless request to the authentication device in the car to start the series of events described above that gives the user the opportunity to use a car. The transmitter may send the request directly to the authentication device or via the authentication centre or another suitable link. Examples of communication links are 2G, 3G, 4G, WiFi or any other sort of existent and future communication medium.

Another advantage is that the user can be comfortable in that all security measures have been taken care of in beforehand, which means that the user does not have to perform a number of tasks when using the car which in turn removes stress from the user when using the car.

A further advantage of the invention is that the solution removes the previously known step of leaving an authentication device in the vehicle. In todays and future vehicles a communication link is available for wireless communication with an external device, for example a server, for exchanging information between different units in the vehicle and external communication points. Hence, there is no additional equipment required to be installed into the vehicle, which saves investment costs

In one example of the invention, the first storing means permanently stores user identity information on at least one original user key being specially adapted for that one vehicle in which the first storing means is implemented. In addition to the original key, the first storing means may store user identity information for any key made for a predetermined kind of lock fitted in one or more vehicles to be used by a participant in a vehicle pool or vehicle fleet.

### Brief description of drawings

The invention will below be described in connection to a number of drawings, in which:
Figure 1 schematically shows an authentication system according to the invention;
Figure 2 schematically shows a signal diagram over the basic communication according to the invention, and in which;
Fig. 3 schematically shows a block scheme over an example of the method.

### Detailed description of drawings

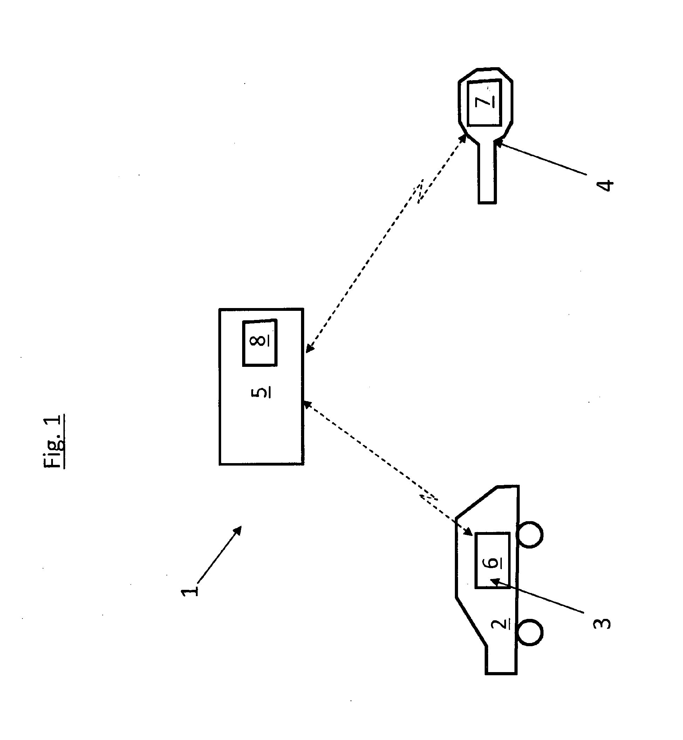

Figure 1 schematically shows an authentication system 1 according to the invention for a pool of vehicles 2. The authentication system 1 comprises an authentication device 3 in the vehicle 2, a user key 4 for opening and starting the vehicle 2 and an authentication centre 5.

The authentication device 3 comprises first storing means 6 for storing access information regarding at least one allowed user key 4 for the vehicle. The authentication device 3 comprises means for sending and receiving information to and from the authentication centre 5.

The user key comprises second storing means 7 for storing at least a user key identity information. The user key is during manufacturing forever given a serial number but is later also programmed with the user key identity information. The user key identity information is The authentication centre 5 comprises means for sending and receiving information to and from the authentication device 3. The authentication centre 5 comprises third storing means 8 for storing the user key identity information.

The request from the user to use the vehicle 2 is processed in the authentication centre 5 and the authentication centre 5 then prepares the authentication device.

The request from the user to use the vehicle 2 may be done directly to the authentication centre 5, or via a nomadic device, call center or webpage or the like.

The authentication centre 5 comprises means for creating and/or storing an encryption key being specific for the vehicle. The encryption key is a random number generated, for example, by the authentication centre 5 and may initially be transferred to the vehicle during the manufacturing process.
The authentication centre 5 is arranged to communicate with the authentication device 3 for retrieving the encryption key upon request from a user to use the authentication device 3.

The authentication system may refer to an internet based service, for example a "cloud" service, and the communication may be done vi any known or future wireless communication systems, for example 2G,3G,4G or WiFi.

The authentication centre 5 is arranged to create a time limited access information by encrypting the user key identity information by use of the encryption key and then sending the access information to the authentication device 3 together with either a time period information or a time stamp. The authentication device 3 is arranged to either use the time period for allowing user access to the vehicle 2 or arranged to use the time stamp for creating a time period during which the user is allowed access to the vehicle. The basic inventive idea is to set the time period for single use and after timeout the original vehicle ke code set is reprogrammed to the car. However, multiple access is possible, i.e. several uses during a single time interval or multiple uses during multiple time intervals and the invention shall not be limited to only single use.

The authentication device 3 is arranged to store the time limited access information in the first storing means 6. The authentication device 3 is arranged to decrypt the stored access information for comparison between the embedded user key identity information stored in the first storing means 6 with the user key identity information stored in the second storing means 7. The authentication device 3 is arranged to authenticate if the key identity information in the second storing means 7 is matching the one temporary stored in the first storing means 6.

The authentication device 3 is arranged to remove the access information when the time period is ended in order to hinder use of the vehicle outside the set time frame.

The information stored in the different devices are typically stored in non-volatile memories in the form of, for example, digital code, magnetic, printed circuit board, etc.

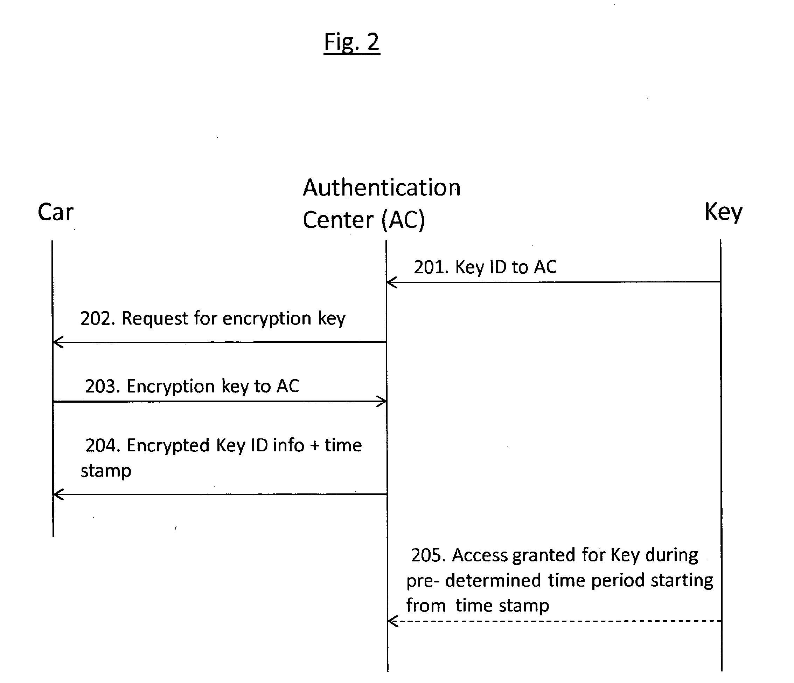

Figure 2 schematically shows a signal diagram over the basic communication according to the invention.

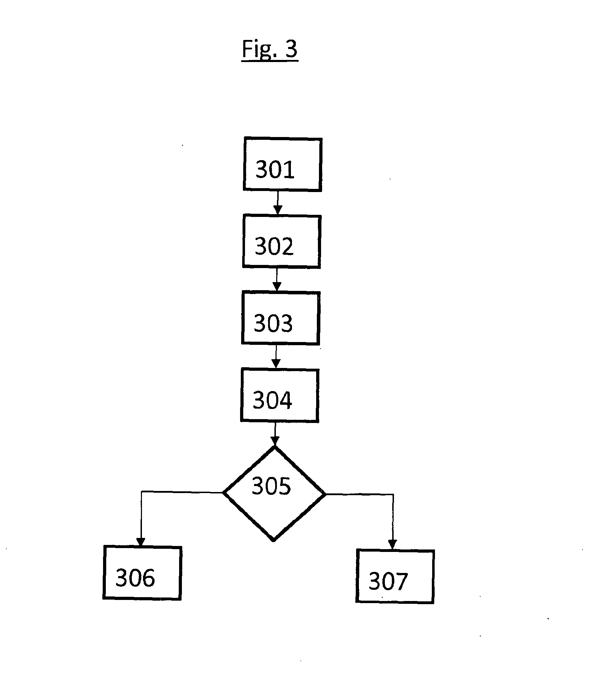

Fig. 3 schematically shows a block scheme over an example of the method. For simplicity the example mentions one vehicle and one key, but it is to be understood that in a vehicle fleet or pool of vehicles, there can be one or many vehicles and one or many users.

### Block 301:

The key is given or has a user key Identity information comprising a digital code and possible additional information. The user key identity information is stored in the key in a suitable memory device, according to what has been described in connection to figure 1. The Key is typically an original key for the car make and is programmed for a specific vehicle identity, but may according to the invention be used in a different vehicle after having reprogrammed the vehicle authentication device 3. The key is normally delivered to a user when the user buys a vehicle.

### Block 302:

The authentication centre 5 stores the user key identity information from at least the key upon request from the user in the fleet pool. The user may be long term member of the pool or may be a short term member.

### Block 302:

Upon request from a key owner to use a vehicle during a specific time period, the authentication centre communicates the request to the authentication device. The authentication device in the vehicle sends a request to the authentication centre for encrypted key information. The request comprises an encryption key, which may be temporary, to be used by the authentication centre to encrypt the information from the user key Identity information. The request can be submitted directly to the authentication center or via an auxiliary device, and then processed by the authentication center.

### Block 303:

The authentication centre 5 receives the request from the authentication device. The authentication centre encrypts the user identity information by use of the encryption key to allow for the key to be used to open and start the vehicle. The authentication centre also generates a time stamp to mark a point in time. The time stamp is intended to be used by the authentication device to create a temporary time period during which the key is allowed to be used. As an alternative, the time stamp is used by the authentication centre to create a time period to be used by the authentication device for allowing the key to open and use the vehicle. The time period can either be created based on an essentially immediate need for a user to use the vehicle for a predetermined time period; or can be created based on an essentially immediate need for a user to use the vehicle with a predetermined maximum time limit set by the authentication device; or can be created based on a request for a specific time period from the user. There could be a number of rules dictating the possibility to use the vehicle, for example: a max time limit, or no max time limit; and/or a time period dependent on end time during which period the user have to activate and start the vehicle; and/or warning the driver that the time limit is exceeded and that the vehicle will be demobilized after the next switching off the engine, etc. These types of rules are dependent on a number of parameters and are therefore a design choice left to the system user. The encrypted information and the time stamp or time period are transmitted to the authentication device.

### Block 304:

The authentication device receives the encrypted information and the time stamp or time period and temporary stores the same in a suitable memory device, according to what has been described in connection to figure 1. The encrypted information and the time stamp or time period is stored until the time period is ended and is then discarded, i.e. removed from the memory.

### Block 305:

If the key is used during the time period, goto Block 306.
If the key is not used, goto Block 307.

### Block 306:

The key is used within the time period stored in the authentication device and is therefore allowed to open the vehicle and start the engine for use. Dependent on chosen design parameters, the key may be used once or several times during the time period.

### Block 307:

The key is not used within the time period stored in the authentication device and the encrypted information from the user key Identity information and the time stamp or time period was discarded when the time period was ended. Hence, the key cannot be used for opening or starting the vehicle.

## Claims

1. An authentication system (1) for a pool of vehicles (2), the authentication system (1) comprising an authentication device (3) in the vehicle (2), a user key (4) for opening and starting the vehicle (2) and an authentication centre (5),
- the authentication device (3) comprising first storing means (6) for storing access information regarding at least one allowed user key (4) for the vehicle, the authentication device (3) comprising means for sending and receiving information to and from the authentication centre (5),
- the user key comprising second storing means (7) for storing at least a user key identity information,
- the authentication centre (5) comprising means for sending and receiving information to and from the authentication device (3), the authentication centre (5) comprising third storing means (8) for storing the user key identity information,
**characterized in that** the authentication device (3) comprises means for creating and/or storing an encryption key being specific for the vehicle, wherein the authentication centre (5) is arranged to communicate with the authentication device (3) for retrieving the encryption key upon request from a user to use a vehicle (2), wherein the authentication centre (5) is arranged to create a time limited access information by encrypting the user key identity information by use of the encryption key and then sending the access information to the authentication device (3) together with either a time period information or a time stamp, wherein the authentication device (3) is arranged to either use the time period for allowing user access to the vehicle (2) or arranged to use the time stamp for creating a time period during which the user is allowed access to the vehicle, wherein the authentication device is arranged to store the time limited access information in the first storing means (6).

2. A system according to claim 1, wherein the user key has a unique and non-alterable serial number from the manufacturing plant and wherein the user key identity information is programmed and stored in the second storing means (7).

3. A system according to claim 1 or 2, wherein the request from the user to use the vehicle (2) is done directly to the authentication device (3).

4. A system according to claim 1 or 2, wherein the request from the user to use the vehicle (2) is done via the authentication centre (5).

5. A system according to any one of the preceding claims, wherein the authentication device (3) is arranged to remove the access information when the time period is ended.

6. A system according to any one of the preceding claims, wherein the authentication devi ce (3) is arranged to decrypt the access information for comparison between the embedded user key identity information stored in the first storing means (6) with the user key identity information stored in the second storing means (7).

7. A system according to any one of the preceding claims, wherein the first storing means (6) is arranged to permanently store information on at least one original user key (4) being specially adapted for that one vehicle (2) in which the first storing means (6) is implemented.

8. A method for an authentication system (1) for a pool of vehicles (2), the authentication system (1) comprising an authentication device (3) in the vehicle (2), a user key (4) for opening and starting the vehicle (2) and an authentication centre (5),
- the authentication device (3) comprising first storing means (6) for storing access information regarding at least one allowed user key (4) for the vehicle, the authentication device (3) sending and receiving information to and from the authentication centre (5),
- the user key comprising second storing means (7) for storing at least a user key identity information,
- the authentication centre (5) sending and receiving information to and from the authentication device (3), the authentication centre (5) comprising third storing means (8) for storing the user key identity information,
**characterized in that** the authentication device (3) comprises means for creating and/or storing an encryption key being specific for the vehicle, wherein the authentication centre (5) communicates with the authentication device (3) for retrieving the encryption key upon request from a user to use a vehicle (2), wherein the authentication centre (5) creates a time limited access information by encrypting the user key identity information by use of the encryption key and then sends the access information to the authentication device (3) together with either a time period information or a time stamp, wherein the authentication device (3) uses the time period for allowing user access to the vehicle (2) or arranged to use the time stamp for creating a time period during which the user is allowed access to the vehicle, wherein the authentication device stores the time limited access information in the first storing means (6).

9. A method according to claim 8, wherein the user key has a unique and non-alterable serial number from the manufacturing plant and wherein the user key identity information is programmed and stored in the second storing means (7).

10. A method according to claim 8 or 9, wherein the request from the user to use the vehicle (2) is done directly to the authentication device (3).

11. A method according to claim 8 or 9, wherein the request from the user to use the vehicle (2) is done via the authentication centre (5).

12. A method according to any one of claims 8-11, wherein the authentication device (3) removes the access information when the time period is ended.

13. A method according to any one of claims 8-12, wherein the authentication device (3) decrypts the access information for comparison between the embedded user key identity information stored in the first storing means (6) with the user key identity information stored in the second storing means (7).

14. A method according to any one of claims 8-13, wherein the first storing means (6) permanently stores information on at least one original user key (4) being specially adapted for that one vehicle (2) in which the first storing means (6) is implemented.

## Patentansprüche

1. Authentifizierungssystem (1) für einen Fahrzeugpark (2), wobei das Authentifizierungssystem (1) eine Authentifizierungsvorrichtung (3) in dem Fahrzeug (2), einen Anwenderschlüssel (4) zum Öffnen und Starten des Fahrzeugs (2) und eine Authentifizierungszentrale (5) umfasst, wobei
- die Authentifizierungsvorrichtung (3) erste Speichermittel (6) zum Speichern von Zugriffsinformationen bezüglich mindestens eines erlaubten Anwenderschlüssels (4) für das Fahrzeug umfasst, wobei die Authentifizierungsvorrichtung (3) Mittel zum Senden von Informationen an die Authentifizierungszentrale (5) und zum Empfangen von Informationen von der Authentifizierungszentrale (5) umfasst,
- der Anwenderschlüssel zweite Speichermittel (7) zum Speichern wenigstens von Anwenderschlüsselidentitätsinformationen umfasst,
- die Authentifizierungszentrale (5) Mittel zum Senden von Informationen an die Authentifizierungsvorrichtung (3) und zum Empfangen von Informationen von der Authentifizierungsvorrichtung (3) umfasst, wobei die Authentifizierungszentrale (5) dritte Speichermittel (8) zum Speichern der Anwenderschlüsselidentitätsinformationen umfasst,
**dadurch gekennzeichnet, dass** die Authentifizierungsvorrichtung (3) Mittel zum Erzeugen und/oder Speichern eines Verschlüsselungsschlüssels, der fahrzeugspezifisch ist, umfasst, wobei die Authentifizierungszentrale (5) dafür ausgelegt ist, mit der Authentifizierungsvorrichtung (3) zu kommunizieren, um den Verschlüsselungsschlüssel, bei Anfrage eines Anwenders ein Fahrzeug (2) zu benutzen, abzurufen, wobei die Authentifizierungszentrale (5) dafür ausgelegt ist, durch Verschlüsseln der Anwenderschlüsselidentitätsinformationen durch Anwenden des Verschlüsselungsschlüssels zeitlich begrenzte Zugriffsinformationen zu erzeugen und dann die Zugriffsinformationen entweder zusammen mit Zeitrauminformationen oder mit einem Zeitstempel an die Authentifizierungsvorrichtung (3) zu senden, wobei die Authentifizierungsvorrichtung (3) dafür ausgelegt ist, entweder den Zeitraum zu verwenden, um dem Anwender Zugriff zu dem Fahrzeug (2) zu erlauben, oder dafür ausgelegt ist, den Zeitstempel zu verwenden, um einen Zeitraum zu erzeugen, während dessen dem Anwender Zugriff zu dem Fahrzeug erlaubt ist, wobei die Authentifizierungsvorrichtung dafür ausgelegt ist, die zeitlich begrenzten Zugriffsinformationen in den ersten Speichermitteln (6) zu speichern.

2. System nach Anspruch 1, wobei der Anwenderschlüssel eine eindeutige und unveränderbare Seriennummer des Herstellwerks aufweist und wobei die Anwenderschlüsselinformationen auf den zweiten Speichermitteln (7) programmiert und gespeichert sind.

3. System nach Anspruch 1 oder 2, wobei die Anfrage von dem Anwender, das Fahrzeug (2) zu benutzen, direkt an die Authentifizierungsvorrichtung (3) gestellt wird.

4. System nach Anspruch 1 oder 2, wobei die Anfrage von dem Anwender, das Fahrzeug (2) zu benutzen, über die Authentifizierungszentrale (5) gestellt wird.

5. System nach einem der vorhergehenden Ansprüche, wobei die Authentifizierungsvorrichtung (3) dafür ausgelegt ist, die Zugriffsinformationen zu löschen, wenn der Zeitraum beendet ist.

6. System nach einem der vorhergehenden Ansprüche, wobei die Authentifizierungsvorrichtung (3) dafür ausgelegt ist, die Zugriffsinformationen zu entschlüsseln, um die eingebetteten Anwenderschlüsselidentitätsinformationen, die in den ersten Speichermitteln (6) gespeichert sind, mit den Anwenderschlüsselidentitätsinformationen, die in den zweiten Speichermitteln (7) gespeichert sind, zu vergleichen.

7. System nach einem der vorhergehenden Ansprüche, wobei die ersten Speichermittel (6) dafür ausgelegt sind, Informationen über mindestens einen ursprünglichen Anwenderschlüssel (4), der speziell für dieses eine Fahrzeug (2), in dem die ersten Speichermittel (6) implementiert sind, ausgelegt ist, dauerhaft zu speichern.

8. Verfahren für ein Authentifizierungssystem (1) für einen Fahrzeugpark (2), wobei das Authentifizierungssystem (1) eine Authentifizierungsvorrichtung (3) in dem Fahrzeug (2), einen Anwenderschlüssel (4) zum Öffnen und Starten des Fahrzeugs (2) und eine Authentifizierungszentrale (5) umfasst, wobei
- die Authentifizierungsvorrichtung (3) erste Speichermittel (6) zum Speichern von Zugriffsinformationen bezüglich mindestens eines erlaubten Anwenderschlüssels (4) für das Fahrzeug umfasst, wobei die Authentifizierungsvorrichtung (3) Informationen an die Authentifizierungszentrale (5) sendet und Informationen von der Authentifizierungszentrale (5) empfängt,
- der Anwenderschlüssel zweite Speichermittel (7) zum Speichern von wenigstens Anwenderschlüsselidentitätsinformationen umfasst,
- die Authentifizierungszentrale (5) Informationen an die Authentifizierungsvorrichtung (3) sendet und Informationen von der Authentifizierungsvorrichtung (3) empfängt, wobei die Authentifizierungszentrale (5) dritte Speichermittel (8) zum Speichern der Anwenderschlüsselidentitätsinformationen umfasst,
**dadurch gekennzeichnet, dass** die Authentifizierungsvorrichtung (3) Mittel zum Erzeugen und/oder Speichern eines Verschlüsselungsschlüssels, der fahrzeugspezifisch ist, umfasst, wobei die Authentifizierungszentrale (5) mit der Authentifizierungsvorrichtung (3) kommuniziert, um den Verschlüsselungsschlüssel bei Anfrage eines Anwenders ein Fahrzeug (2) zu benutzen, abzurufen, wobei die Authentifizierungszentrale (5) durch Verschlüsseln der Anwenderschlüsselidentitätsinformationen durch Anwenden des Verschlüsselungsschlüssels zeitlich begrenzte Zugriffsinformationen erzeugt und dann die Zugriffsinformationen entweder zusammen mit Zeitrauminformationen oder mit einem Zeitstempel an die Authentifizierungsvorrichtung (3) sendet, wobei die Authentifizierungsvorrichtung (3) entweder den Zeitraum verwendet, um dem Anwender Zugriff zu dem Fahrzeug (2) zu erlauben, oder dafür ausgelegt ist, den Zeitstempel zu verwenden, um einen Zeitraum zu erzeugen, während dessen dem Anwender Zugriff zu dem Fahrzeug erlaubt ist, wobei die Authentifizierungsvorrichtung die zeitlich begrenzten Zugriffsinformationen in den ersten Speichermitteln (6) speichert.

9. Verfahren nach Anspruch 8, wobei der Anwenderschlüssel eine eindeutige und unveränderbare Seriennummer des Herstellwerks aufweist und wobei die Anwenderschlüsselinformationen auf den zweiten Speichermitteln (7) programmiert und gespeichert sind.

10. Verfahren nach Anspruch 8 oder 9, wobei die Anfrage von dem Anwender, das Fahrzeug (2) zu benutzen, direkt an die Authentifizierungsvorrichtung (3) gestellt wird.

11. Verfahren nach Anspruch 8 oder 9, wobei die Anfrage von dem Anwender, das Fahrzeug (2) zu benutzen, über die Authentifizierungszentrale (5) gestellt wird.

12. Verfahren nach einem der Ansprüche 8-11, wobei die Authentifizierungsvorrichtung (3) die Zugriffsinformationen löscht, wenn der Zeitraum beendet ist.

13. Verfahren nach einem der Ansprüche 8-12, wobei die Authentifizierungsvorrichtung (3) die Zugriffsinformationen entschlüsselt, um die eingebetteten Anwenderschlüsselidentitätsinformationen, die in den ersten Speichermitteln (6) gespeichert sind, mit den Anwenderschlüsselidentitätsinformationen, die in den zweiten Speichermitteln (7) gespeichert sind, zu vergleichen.

14. Verfahren nach einem der Ansprüche 8-13, wobei die ersten Speichermittel (6) Informationen über mindestens einen ursprünglichen Anwenderschlüssel (4), der speziell für dieses eine Fahrzeug (2), in dem die ersten Speichermittel (6) implementiert sind, ausgelegt ist, dauerhaft speichern.

## Revendications

1. Système d'authentification (1) pour un parc de véhicules (2), ce système d'authentification (1) comprenant un dispositif d'authentification (3) dans le véhicule (2), une clé d'utilisateur (4) pour ouvrir et démarrer le véhicule (2) et un centre d'authentification (5),
- ce dispositif d'authentification (3) comprenant un premier moyen de stockage (6) pour stocker des informations d'accès concernant au moins une clé d'utilisateur autorisée (4) pour le véhicule, ce dispositif d'authentification (3) comprenant un moyen pour envoyer des informations au centre d'authentification (5) et pour en recevoir de celui-ci,
- la clé de l'utilisateur comprenant un deuxième moyen de stockage (7) pour stocker au moins les informations d'identité d'une clé d'utilisateur,
- le centre d'authentification (5) comprenant un moyen pour envoyer des informations au dispositif d'authentification (3) et pour en recevoir de celui-ci, le centre d'authentification (5) comprenant un troisième moyen de stockage (8) pour stocker les informations d'identité de la clé de l'utilisateur,
**caractérisé en ce que** le dispositif d'authentification (3) comprend un moyen pour créer et/ou pour stocker une clé de chiffrement étant spécifique au véhicule, le centre d'authentification (5) étant agencé de façon à communiquer avec le dispositif d'authentification (3) pour récupérer la clé de chiffrement sur la demande d'un utilisateur d'utiliser un véhicule (2), le centre d'authentification (5) étant agencé de façon à créer des informations d'accès limitées dans le temps en chiffrant les informations d'identité de la clé de l'utilisateur au moyen de la clé de chiffrement puis à envoyer ces informations d'accès au dispositif d'authentification (3) avec soit des informations de période de temps, soit une estampille temporelle, le dispositif d'authentification (3) étant agencé de façon à soit utiliser la période de temps pour autoriser l'accès de l'utilisateur au véhicule (2), soit utiliser l'estampe temporelle pour créer une période de temps pendant laquelle l'utilisateur est autorisé à accéder au véhicule, le dispositif d'authentification étant agencé de façon à stocker les informations d'accès limitées dans le temps dans le premier moyen de stockage (6).

2. Système selon la revendication 1, dans lequel la clé de l'utilisateur a un numéro de série unique et non altérable provenant de l'usine de fabrication et dans lequel les informations d'identité de la clé de l'utilisateur sont programmées et stockées dans le deuxième moyen de stockage (7).

3. Système selon la revendication 1 ou 2, dans lequel la demande de l'utilisateur d'utiliser le véhicule (2) est faite directement au dispositif d'authentification (3).

4. Système selon la revendication 1 ou 2, dans lequel la demande de l'utilisateur d'utiliser le véhicule (2) est faite par l'intermédiaire du centre d'authentification (5).

5. Système selon l'une quelconque des revendications précédentes, dans lequel le dispositif d'authentification (3) est agencé de façon à enlever les informations d'accès lorsque la période de temps est terminée.

6. Système selon l'une quelconque des revendications précédentes, dans lequel le dispositif d'authentification (3) est agencé de façon à déchiffrer les informations d'accès pour permettre la comparaison entre les informations incorporées d'identité de la clé de l'utilisateur stockées dans le premier moyen de stockage (6) et les informations d'identité de la clé de l'utilisateur stockées dans le deuxième moyen de stockage (7).

7. Système selon l'une quelconque des revendications précédentes, dans lequel le premier moyen de stockage (6) est agencé de façon à stocker des informations de façon permanente sur au moins une clé d'utilisateur originale (4) étant spécialement adaptée pour ce véhicule particulier (2) dans lequel le premier moyen de stockage (6) est mis en oeuvre.

8. Procédé pour un système d'authentification (1) pour un parc de véhicules (2), ce système d'authentification (1) comprenant un dispositif d'authentification (3) dans le véhicule (2), une clé d'utilisateur (4) pour ouvrir et démarrer le véhicule (2) et un centre d'authentification (5),
- ce dispositif d'authentification (3) comprenant un premier moyen de stockage (6) pour stocker des informations d'accès concernant au moins une clé d'utilisateur autorisée (4) pour le véhicule, ce dispositif d'authentification (3) envoyant des informations au centre d'authentification (5) et en recevant de celui-ci,
- la clé d'utilisateur comprenant un deuxième moyen de stockage (7) pour stocker au moins les informations d'identité d'une clé d'utilisateur,
- le centre d'authentification (5) envoyant des informations au dispositif d'authentification (3) et en recevant de celui-ci, le centre d'authentification (5) comprenant un troisième moyen de stockage (8) pour stocker les informations d'identité de la clé de l'utilisateur,
**caractérisé en ce que** le dispositif d'authentification (3) comprend un moyen pour créer et/ou pour stocker une clé de chiffrement étant spécifique pour le véhicule, le centre d'authentification (5) communiquant avec le dispositif d'authentification (3) pour récupérer la clé de chiffrement sur la demande d'un utilisateur d'utiliser un véhicule (2), le centre d'authentification (5) créant des informations d'accès limitées dans le temps en chiffrant les informations d'identité de la clé de l'utilisateur au moyen de la clé de chiffrement, puis envoyant ces informations d'accès au dispositif d'authentification (3) avec soit des informations de période de temps, soit une estampille temporelle, le dispositif d'authentification (3) utilisant cette période de temps pour autoriser l'accès de l'utilisateur au véhicule (2), ou étant agencé de façon à utiliser l'estampe temporelle pour créer une période de temps pendant laquelle l'utilisateur est autorisé à accéder au véhicule, le dispositif d'authentification stockant les informations d'accès limitées dans le temps dans le premier moyen de stockage (6).

9. Procédé selon la revendication 8, dans lequel la clé de l'utilisateur a un numéro de série unique et non altérable provenant de l'usine de fabrication et dans lequel les informations d'identité de la clé de l'utilisateur sont programmées et stockées dans le deuxième moyen de stockage (7).

10. Procédé selon la revendication 8 ou 9, dans lequel la demande de l'utilisateur d'utiliser le véhicule (2) est faite directement au dispositif d'authentification (3).

11. Procédé selon la revendication 8 ou 9, dans lequel la demande de l'utilisateur d'utiliser le véhicule (2) est faite par l'intermédiaire du centre d'authentification (5).

12. Procédé selon l'une quelconque des revendications 8 à 11, dans lequel le dispositif d'authentification (3) enlève les informations d'accès lorsque la période de temps est terminée.

13. Procédé selon l'une quelconque des revendications 8 à 12, dans lequel le dispositif d'authentification (3) déchiffre les informations d'accès pour permettre la comparaison entre les informations incorporées d'identité de la clé de l'utilisateur stockées dans le premier moyen de stockage (6) et les informations d'identité de la clé de l'utilisateur stockées dans le deuxième moyen de stockage (7).

14. Procédé selon l'une quelconque des revendications 8 à 13, dans lequel le premier moyen de stockage (6) stocke les informations de façon permanente sur au moins une clé d'utilisateur originale (4) étant spécialement adaptée pour ce véhicule particulier (2) dans lequel le premier moyen de stockage (6) est mis en oeuvre.
